# EUROPEAN PATENT APPLICATION

(11) **EP 3 454 606 A2**
(43) Date of publication of application: **13.03.2019**
(21) Application number: 18202089.1
(22) Date of filing: 10.06.2015
(51) Int. Cl.: H04W 48/16, H04W 52/02, H04W 36/00, H04W 76/16, H04W 88/06

(54) **POWER SAVING VIA ENHANCED SCANNING AND BEACONING FOR CO-LOCATED APS AND ASSOCIATED STAS**

(30) Priority: 20.06.2014 US 201414311062
(62) Divisional of application: 15730644.0
(71) Applicant: Qualcomm Incorporated, San Diego, CA 92121-1714 (US)
(72) Inventor: ZHOU, Yan, San Diego, CA 92121-1714 (US); CHERIAN, George, San Diego, CA 92121-1714 (US); MERLIN, Simone, San Diego, CA 92121-1714 (US)
(74) Representative: Wegner, Hans

(57) **Abstract**

A wireless terminal, when operating in a system including co-located access points (APs), may, to save scan power, only scan for a second wireless network when the received signal strength indicator (RSSI) from a first wireless network (WAN) is above or below a certain threshold. The AP from a first WAN may obtain the RSSI of a second WAN from terminals in the coverage of the second WAN, and compute the RSSI edge of the second WAN. This RSSI edge forms a threshold where terminals may start scanning for the edge of the second WAN. In addition, a second AP may only turn on and transmit a beacon when terminals exist within its range, determined by the second AP based on communications of co-located APs. Finally, the AP may provide hierarchical beacon messages to terminal monitoring of beacons on WANs when no information is being transmitted on those WANs.

## Description

### BACKGROUND OF THE INVENTION

### Field of the Invention

The present application relates generally to wireless network communications, and more specifically to systems, methods, and devices for saving power using enhanced beaconing and scanning on a wireless network.

### Description of the Related Art

In many telecommunication systems, communications networks are used to exchange messages among several interacting spatially-separated devices. Networks may be classified according to geographic scope, which could be, for example, a metropolitan area, a local area, or a personal area. Such networks would be designated respectively as a wide area network (WAN), metropolitan area network (MAN), local area network (LAN), wireless local area network (WLAN), or personal area network (PAN). Networks also differ according to the switching/routing technique used to interconnect the various network nodes and devices (e.g. circuit switching vs. packet switching), the type of physical media employed for transmission (e.g. wired vs. wireless), and the set of communication protocols used (e.g. Internet protocol suite, SONET (Synchronous Optical Networking), Ethernet, etc.).

Wireless networks are often preferred when the network elements are mobile and thus have dynamic connectivity needs, or if the network architecture is formed in an ad hoc, rather than fixed, topology. Wireless networks employ intangible physical media in an unguided propagation mode using electromagnetic waves in the radio, microwave, infra-red, optical, etc. frequency bands. Wireless networks advantageously facilitate user mobility and rapid field deployment when compared to fixed wired networks.

Power and other resources may be wasted by wireless access terminals that needlessly scan for wireless networks when the wireless access terminals are not within range of the wireless networks and access points that needlessly broadcast beacons to non-existent wireless access terminals on their wireless networks. These wireless access terminals may continuously scan for beacons on wireless networks to which they are not connected when there is no possibility for them to be connected (e.g., the wireless access terminal is one or more meters beyond the range of the wireless network). Similarly, the access points creating wireless networks may waste power and other resources by continuously generating and transmitting beacons on a wireless network to which no wireless access terminal is connected. Accordingly, systems, methods, and devices for allowing a wireless device or an access point to refrain from performing wasteful activities are desired.

### SUMMARY OF THE INVENTION

The systems, methods, and devices of the invention each have several aspects, no single one of which is solely responsible for its desirable attributes. Without limiting the scope of this invention as expressed by the claims which follow, some features will now be discussed briefly. After considering this discussion, and particularly after reading the section entitled "Detailed Description," one will understand how the features of the various embodiments of this invention provide advantages that include improved communications between access points and stations in a wireless network.

One aspect of the subject matter described in the disclosure provides an apparatus for communicating, the apparatus comprising a processing system configured to determine a signal strength criterion of a first device based on a communication from a second device and scan for the first device if a received signal strength from the second device satisfies the signal strength criterion.

Another aspect of the subject matter described in the disclosure provides a method for communicating, the method comprising receiving a communication from a first device, determining a signal strength criterion of a second device based on the communication from the first device, and scanning for the second device if a received signal strength from the first device satisfies the criterion.

Yet another aspect of the subject matter described in the disclosure provides an apparatus for communicating, the apparatus comprising a processing system configured to generate a beacon message for transmission on a second link based on a relationship of a first device to a second device on a first link or a relationship of the first device to the apparatus on the second link.

An additional aspect of the subject matter described in the disclosure provides an apparatus for communicating, the apparatus comprising a processing system configured to generate a first beacon message that includes information for a first band and a second band, the processing system further configured to generate a second beacon message, the first beacon message being configured for transmission on the first band and the second beacon message being configured for transmission on the second band, wherein the processing system is further configured to generate the second beacon message to include information comprising a preamble with a basic service set identifier in a signal field or a physical layer sequence mapped to a basic service set identifier.

### BRIEF DESCRIPTION OF THE DRAWINGS

The above-mentioned aspects, as well as other features, aspects, and advantages of the present technology will now be described in connection with various embodiments, with reference to the accompanying drawings. The illustrated embodiments, however, are merely examples and are not intended to be limiting. Throughout the drawings, similar symbols typically identify similar components, unless context dictates otherwise. Note that the relative dimensions of the following figures may not be drawn to scale.
FIG. 1 illustrates one possible organization of a wireless network system with multiple wireless networks, multiple access points, and multiple wireless access terminals.
FIG. 2 shows an embodiment of a device which may comprise one or more of the devices of FIG. 1.
FIG. 3 illustrates an embodiment of the structure of a message which may be used to communicate information between two or more devices of FIG. 1.
FIG. 4 illustrates the communications exchanged between a wireless access terminal and multiple access points.
FIG. 5 illustrates embodiments of the variety of beacon messages that may be generated and transmitted by an access point on multiple wireless networks on which the access point communicates.
FIG. 6 represents a flowchart of a method for scanning for a second wireless network based on satisfying criteria.
FIG. 7 is a functional block diagram of a wireless access terminal that may be employed within the wireless communication system of FIG. 1.
FIG. 8 represents a flowchart of a method for saving power at the access point by generating a beacon message on a wireless network based on determining a device is present within the coverage area of the wireless network.
FIG. 9 represents a flowchart of a method for saving power at the access point by generating a hierarchical beacon message system on a wireless communication system of Fig. 1.
FIG. 10 is a functional block diagram of a wireless access terminal that may be employed within the wireless communication system of FIG. 1.

### DETAILED DESCRIPTION OF THE PREFERRED EMBODIMENT

Various aspects of the novel systems, apparatuses, and methods are described more fully hereinafter with reference to the accompanying drawings. The teachings disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of or combined with any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

Wireless network technologies may include various types of wireless local area networks (WLANs). A WLAN may be used to interconnect nearby devices together, employing widely used networking protocols. The various aspects described herein may apply to any communication standard, such as Wi-Fi or, more generally, any member of the IEEE 802.11 family of wireless protocols. For example, the various aspects described herein may be used as part of the IEEE 802.11 ah protocol, which uses sub-1 GHz bands.

In some implementations, a WLAN includes various devices which are the components that access the wireless network. For example, there may be three types of devices: access points ("APs"), relays, and clients (also referred to as stations, or "STAs"). In general, an AP serves as a hub or base station for the WLAN, a relay device provides a communication link between the AP for the WLAN and one or more STAs, which serve as users of the WLAN. For example, an STA may be a laptop computer, a personal digital assistant (PDA), a mobile phone, etc. In an example, an STA connects to an AP, through a relay device, via Wi-Fi (e.g., IEEE 802.11 protocol such as 802.11ah) compliant wireless links to obtain general connectivity to the Internet or to other wide area networks. In some implementations, an STA may also be used as a relay device. In some implementations an STA may also be used as an AP. A STA or an AP may be referred to as a node in a wireless communications network. A STA or an AP may be referred to as a wireless device or an access terminal in a wireless communications network.

Another aspect disclosed is a wireless node for wireless communication. The wireless node includes an antenna, a processing system configured to generate a message indicating a start time of a window during which one or more devices are permitted to communicate with the apparatus, the start time being based on an absolute time reference; and a transmitter configured to transmit the generated message using the antenna.

An access point ("AP") may also comprise, be implemented as, or known as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, or some other terminology.

A station "STA" may also comprise, be implemented as, or known as an access terminal ("AT"), a subscriber station, a subscriber unit, a mobile station, a remote station, a remote terminal, a user terminal, a user agent, a user device, user equipment, or some other terminology. In some implementations, an access terminal may comprise a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

A wireless access terminal may comprise an access terminal ("AT") or STA, an AP or a relay-capable wireless access terminal having at least one of a STA or AP operation, i.e., a wireless access terminal may have AT or STA operation, AP operation, or both AT/STA and AP operations.

As discussed above, certain of the devices described herein may implement the 802.11ah standard, for example. Such devices, whether used as an STA, a relay device, an AP, or other device, may be used for smart metering or in a smart grid network. Such devices may provide sensor applications or be used in home automation. The devices may instead or in addition be used in a healthcare context, for example for personal healthcare. They may also be used for surveillance, to enable extended-range Internet connectivity (e.g. for use with hotspots), or to implement machine-to-machine communications.

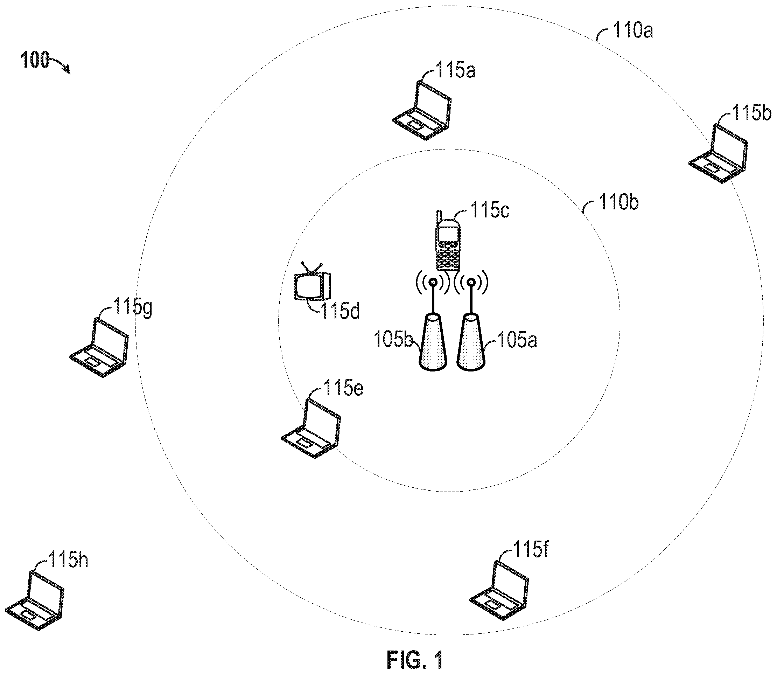

Referring to Fig. 1, an illustrative embodiment of a wireless system with a plurality of access points and their corresponding coverage areas (e.g., wireless networks) and a plurality of wireless access terminals are depicted and generally designated 100. Access points 105a and 105b are depicted and are shown as being co-located and are generally referred to below as access points 105. Each of the access points 105a and 105b is depicted as generating a wireless network, or coverage area, 110a and 110b, respectively, of different ranges from each other. The wireless networks 110a-110b may refer to different bands or distinct networks broadcast by the same or different access points 105a-105b and are generally referred to below as wireless networks 110. As shown, wireless network 110a is larger (covers a larger area and has a greater range) than wireless network 110b. The wireless system 100 as shown contains a plurality of wireless access terminals 115a-115h, generally referred to below as wireless access terminals 115. Some of the wireless access terminals 115a-115h may be within at least one of the wireless network 110a or 110b. In some embodiments, all of the wireless access terminals 115a-115h may be within both wireless networks 110a and 110b. In some other embodiments, some of the wireless access terminals 115a-115h may be within only wireless network 110a and not within wireless network 110b, while in other embodiments, some devices 115a-115h may not be within any of the wireless networks 110a or 110b.

The access points 105a and 105b may enable wireless access terminals 115a-115h associated with the respective wireless networks 110a-110b to communicate with other wireless access terminals 115a-115h or receive and/or send information from and/or to the access points 105a-105b. These communications may be either active and/or passive. In some embodiments, the access points 105a and 105b may generate and manage the overhead necessary for operation of wireless networks 110a and 110b. In some other embodiments, the access points 105a-105b may communicate with all wireless access terminals 115a-115h that are associated with the respective access point 105 to ensure that the associated wireless access terminals 115a-115h are conforming to the operating requirements as may be established by the access points 105a-105b. Being co-located may mean that the access points 105a and 105b are located substantially in the same place. In some embodiments, the access points 105a and 105b may be two separate devices located within a single enclosure (not shown in this figure) with separate or common antennas. In another embodiment, the access points 105a and 105b may be two separate circuits contained within a single device with separate or common antennas. In some other embodiments, the access points 105a and 105b may be two separate devices located in close proximity to each other but not sharing an enclosure. In some embodiments, the co-located access points 105a and 105b may be capable of communicating with each other, such that access point 105a may be able to send a communication directly to access point 105b or vice versa.

Wireless networks 110a and 110b represent the area within which the associated access point 105 may be able to communicate with wireless access terminals 115a-115h within and associated with the respective wireless network 110a-110b. However, the coverage area depicted by the wireless networks 110a and 110b are estimations and may not be exact indicators of the range of communication capabilities. For example, a wireless access terminal 115g located outside of the wireless network 110a but close to the coverage area indicated by the wireless network 110a may still be capable of associating with the wireless network 110a and communicating with the associated access point 105a. However, a wireless access terminal 115h located outside wireless network 110a and not close to the edge of the coverage area indicated by the wireless network 110a may be unable to associate with the wireless network 110a and communicate with the access point 105a. Additionally, wireless access terminals 115a-115h located within a wireless network 110a-110b may not be associated with the wireless network and thus may be unable to communicate with the respective access point 105a-105b.

Wireless access terminals 115a-115h may each be associated with the wireless networks 110a-110b within which they are located. For example, wireless access terminal 115a is depicted as being within wireless network 110a only. Accordingly, wireless access terminal 115a may be associated with wireless network 110a, and thus, wireless access terminal 115a may be capable of communicating with access point 110a. However, since wireless access terminal 115a is not within the wireless network 110b, wireless access terminal 115a may not be associated with wireless network 110b, and, accordingly, may not be able to communicate with access point 110b. Similarly, the remaining wireless access terminals 115b-115h may be associated with the wireless networks 110 within which they are located, if any. In some embodiments, wireless access terminals 115a-115h that are within both wireless networks 110a and 110b may be associated with both wireless networks 110a and 110b, and thus may be capable of communicating with both access points 105a and 105b. In some other embodiments, wireless access terminals 115a-115h that are within both wireless networks 110a and 110b may be associated with only one of the two wireless networks, e.g., wireless access terminal 115d may be associated with only wireless network 110b, while wireless access terminal 115c may be associated with only wireless network 110a. In some additional embodiments, the wireless access terminals 115a-115h that are within both wireless networks 110a and 110b may not be associated with either the wireless networks 110a or 110b. For example, wireless access terminal 115d may be located within both wireless networks 110a and 110b but may not be associated with either wireless network 110a or 110b and thus may be unable to communicate with either access point 105a or 105b. Wireless access terminals 115a-115h that are not located within either wireless network 110a or 110b may not be associated with either wireless network 110a-110b and may be unable to communicate with either access point 105a and 105b. Accordingly, wireless access terminals 115g and 115h, depicted as being located outside both wireless networks 110a and 110b, may not be associated with either wireless network 110a-110b and may be unable to communicate with either access point 105a and 105b.

The wireless access terminals 115a-115h may refrain from continuously scanning for beacons from nearby wireless networks 110a-110b, or may reduce the frequency of the scanning for nearby wireless networks 110a-110b, instead scanning for beacons from nearby wireless networks 110a-110b when one of the wireless access terminals 115a-115h is nearing the vicinity of the wireless network 110a-110b. Scanning for beacons from a wireless network 110a-110b may comprise scanning for the wireless network 110a-110b.

The strength of a signal from the access points 105a and 105b decreases at the distance from the access points 105a and 105b increases and may be greatly impacted by environmental factors, for example other networks, physical structures, etc. Accordingly, the range of the access point 105a and 105b (as indicated by wireless networks 110) may not be as clearly defined as indicated in FIG. 1 by the wireless networks 110a and 110b. Thus, in some embodiments, wireless access terminals 115a-115h outside the depicted wireless networks 110a-110b may still be able to communicate with the wireless network 110a-110b and the associated access point 105a-105b. Similarly, wireless access terminals 115a-115h within the depicted wireless networks 110a-110b but near the edge of the coverage area of the wireless networks 110a-110b may be unable to communicate with the wireless network 110a and 110b and the associated access points 105a-105b.

The wireless access terminals 115a-115h near or within the range of both wireless networks 110a and 110b may desire to communicate with one or more wireless networks 110a and 110b or access points 105a and 105b. Accordingly, to identify when one of the wireless access terminals 115a-115h is within the range of a specific wireless network 110a-110b, wireless access terminals 115a-115h may scan for beacons from the associated wireless network 110a-110b to determine that the capability to communicate with the desired wireless network 110a-110b and access point 105a-105b does exist. For example, wireless access terminal 115d, located within both wireless networks 110a and 110b, may desire to communicate with both access points 105a and 105b. The wireless access terminal 115d may scan for beacons from access point 105a on wireless network 110a and beacons from access point 105b on wireless network 110b. Accordingly, if the wireless access terminal 115d receives beacons on both wireless networks 110a and 110b, then the wireless access terminal 115d may determine it is within the range of both wireless networks 110a and 110b. As another example, wireless access terminal 115d may have no multiband band simultaneous communication capability but may still desire to communicate with an access point 105, for example access point 105b, since access point 105a is heavily loaded. However, some wireless access terminals 115a-115h are only within the range of a single wireless network 110a or 110b, for example wireless access terminal 115f. As shown, wireless access terminal 115f is within only wireless network 110a and is not near the range of the wireless network 110b. Similar to wireless access terminal 115d, wireless access terminal 115f may desire to communicate with both access points 105a and 105b or just with access point 105b (as two examples). However, wireless access terminal 115b may have to continuously scan for beacons from access point 105b to determine when it is within range of wireless network 110b and access point 105b. This continuous scanning may waste power and may be unnecessary when the wireless access terminal 115b when it will be unable to communicate with any other device due to its physical location.

To conserve power and other resources, the wireless access terminals 115a-115h may limit their scanning functions to times when the wireless access terminals 115a-115h can be more certain of its presence in the coverage area of a wireless network 110a-110b, so as to not wastefully scan for non-existent wireless networks 110a-110b or wireless networks 110a-110b that it cannot connect to due to its current location. In some embodiments, the wireless access terminals 115a-115h may not scan for a wireless network 110b unless the wireless access terminals 115a-115h are able to determine that they are within the coverage area of the wireless network 110b. In some other embodiments, the wireless access terminals 115a-115h may merely reduce how often they scan for the wireless network 110b unless they are able to determine that they are within the coverage area of the wireless network 110b.

In some embodiments, this determination that the wireless access terminals 115a-115h are within the coverage area of the wireless network 110b may be based on a communication received from a first wireless network 110a. For example, wireless access terminal 115b, within the wireless network 110a, may receive a communication from access point 105a regarding each of the other access points 105b that are co-located with the access point 105a or whose wireless networks 110b overlap with the wireless network 110a of access point 105a. From this communication, wireless access terminal 115b may measure its received signal strength (RSSI). This measured RSSI may be indicative of the position of the wireless access terminal 115b within the wireless network 110a.

In some other embodiments, this determination may be based on information received from the first wireless network 110a. For example, wireless access terminal 115b, within the wireless network 110a, may receive information via communications with access point 105a regarding each of the other access points 105b that are co-located with the access point 105a or whose wireless networks 110b overlap with the wireless network 110a of access point 105a. This information may indicate whether or not the wireless access terminal 115b may be able to communicate with access point 105b via wireless network 110b in its current position. In some embodiments, this information may indicate the strength of the signal of the wireless network 110a at the wireless access terminal 115b (wireless access terminal 115b RSSI) as measured by the access point 105a or a third party device and a threshold signal strength above which the wireless access terminal 115b is likely to be located within the coverage area of the wireless network 110b. The RSSI value of a communication may be inversely related with the distance between the access point 105a and the wireless access terminals 115a-115h. Thus, as one of the wireless access terminals 115a-115h moves away from the access point 105a (towards the edge of the coverage area of the associated wireless network 110), the RSSI of communications between the wireless access terminals 115a-115h and the access point 105a may decrease. When one of the wireless access terminals 115a-115h moves toward the access point 105a (away from the edge of the coverage area of the associated wireless network 110a), the RSSI of communications between the wireless access terminals 115a-115h and the access point 105a may increase. Accordingly, the RSSI of communications between the wireless access terminals 115a-115h and the access point 105a may provide a general location of the wireless access terminals 115a-115h in relation to the access point 105a.

In some embodiments, the threshold RSSI for determination that a wireless access terminal is within the range of the wireless network 110b may be determined by the wireless access point 105a via communications on wireless network 110a. For example, access point 105b, communicating with wireless access terminals 115a-115h on the wireless network 110b, may request the associated wireless access terminals 115a-115h to report the RSSI of their communications with the wireless network 110a to the access point 105b. In some embodiments, the access point 105b may request the wireless access terminals 115a-115h to report the RSSI of the communications on the wireless network 110a when the RSSI of the communications on wireless network 110b is below a threshold, i.e., when the wireless access terminal 115a-115h is near the edge of the wireless network 110b. The access point 105b may identify a first signal strength of a first communication from the wireless access terminal 115 to the access point 105a, as determined by the access point 105a, based on the communication the access point 105b receives from the access point 105a. Similarly, the access point 105b may identify a second signal strength of a second communication from the access point 105a to the wireless access terminal 115, as determined by the wireless access terminal 115 and reported back to the access point 105a, based on the communication from the access point 105a. For example, the access point 105b may identify when the wireless access terminal 115 RSSI is below the threshold by estimating or identifying the down-link RSSI (e.g., the second signal strength of the second communication from the access point 105a to the wireless access terminal 115) via or from the up-link RSSI from the wireless access terminals 115a-115h (e.g., the first signal strength of the first communication report from the wireless access terminal 115 to the access point 105). In some embodiments, the access point 105b may determine the down-link RSSI (second signal strength) via an indication of the reported second signal strength as reported to the access point 105a from the wireless access terminal 115. In some embodiments, the access point 105b may request wireless access terminals 115a-115h with traffic to report their RSSI values so as to save wireless access terminal power, thus allowing the RSSI reporting to be transmitted along with the information that was scheduled to be communicated via wireless access terminal 115 up-link connections.

Given the reported RSSI values from the wireless access terminals 115a-115h, the access point 105b may determine a percentile of RSSI values (for example, 95 percentile) that is established as the RSSI of the wireless network 110a at the edge of the wireless network 110b. Then, this determined percentile of RSSI values, plus or minus a certain margin of error, may be used as the RSSI threshold at which wireless access terminals 115a-115h may begin scanning for the edge of the coverage area of wireless network 110b. In some embodiments, the access point 105b may communicate this threshold RSSI value to the access point 105a, so that access point 105a may distribute the threshold value to all associated wireless access terminals 115a-115h to they may be aware of when they are approaching the edge of the wireless network 110b.

If the wireless access terminal 115b determines that the received signal strength indicator (RSSI) of the communication received from the first access point 105a is above the threshold signal strength for the second access point 105b as received from the first access point 105a, then the wireless access terminal 115b may determine that it is within the range of the second access point 105b. If the wireless access terminal 115b determines that it is within the range of the second access point 105b, the wireless access terminal 115b may begin or increase scanning for the second wireless network 110b. In some embodiments, scanning for the second wireless network 110b may comprise scanning for beacons on the second wireless network 110b. In order to facilitate scanning for the second wireless network 110b, the wireless access terminal 115b may receive and/or identify additional information regarding the second wireless network 110b, for example, the corresponding channel number, the basic service set identification, and the service set identification for the second wireless network 110b.

Accordingly, the RSSI of the communications taking place on the first wireless network 110a may indicate that the wireless access terminals 115a-115h receiving the communications are about to enter or are about to leave (or exit) the coverage area of the second wireless network 110b. For example, if the wireless access terminal 115a receives a communication indicating its RSSI on the first wireless network 110a is rising above the threshold RSSI value for the second wireless network 110b, the wireless access terminal 115a may determine that it is inside the physical coverage area of the wireless network 110b and may start scanning or increase its scan frequency for the wireless network 110b. In some embodiments, if the wireless access terminal 115d receives a communication indicating that its RSSI on the first wireless network 110a is decreasing below the threshold RSSI value for the second wireless network 110b, the wireless access terminal 115d may determine that it is about to leave (or exit) the coverage area of the second wireless network 110b and may cease communications on the wireless network 110b. The wireless access terminal 115d may determine that it has exited (or is outside) the coverage area of the second wireless network 110b when it can no longer receive beacons from the second wireless network 105b. If the wireless access terminal 115d determines that it has exited the coverage area of the second wireless network 110b, it may send a communication or message to the first access point 105a requesting that access point 105a notify access point 105b that the wireless access terminal 115d is no longer within its coverage area and should stop transmitting data for the wireless access terminal 115d on the second wireless network 110b. If more than one co-located wireless networks 110a-110b exists, then an RSSI threshold for each of the co-located wireless networks 110a-110b may be communicated to the associated wireless access terminals 115a-115h. In some embodiments, the threshold RSSI value for each of the wireless access terminals 115a-115h to determine whether they are entering or leaving the coverage of one or more of wireless networks 110a-110b may be different, i.e., the threshold RSSI value for wireless access terminal 115a may be different than that for wireless access terminal 115h..

In some embodiments, the co-located access points 105a-105b and the wireless access terminals 115a-115h may support multi-band simultaneous transmission (MBS transmissions). This may indicate that the access points 105a-105b and the wireless access terminals 115a-115h may be able to simultaneously communicate across all wireless networks 110a-110b. In some embodiments, access points 105a-105b capable of MBS communications may send a multi-BSSID beacon on a first wireless network 110a that may indicate the existence of pending traffic on any other wireless networks 110b. Accordingly, the wireless access terminals 115a-115h capable of MBS communications may only need to regularly monitor the multi-BSSID beacon on the first wireless network 110a and may be able to sleep on or ignore the second wireless network 110b when there is no pending data on the second wireless network 110b for the wireless access terminals 115a-115h. For example, access point 105a and wireless access terminal 115c may both be capable of MBS communications, and wireless access terminal 115c may thus only monitor the wireless network 110a for beacons and may sleep on wireless network 110b. Access point 105a may broadcast a multi-BSSID beacon on wireless network 110a, the multi-BSSID beacon comprising an indicator to communicate to the wireless access terminal 115c the existence of data to transmit to the wireless access terminal 115c on wireless network 110b. The wireless access terminal 115c may sleep on wireless network 110b until the indicator in the multi-BSSID beacon on wireless network 110a indicates that there is data for the wireless access terminal 115c on the wireless network 110b. After receiving this indicator, the wireless access terminal 115c may wake up on the wireless network 110b to receive its data.

In these embodiments, the wireless access terminals 115a-115h capable of MBS communications may need to be able to identify when it is about to leave the coverage area of the wireless network 110b and indicate to the wireless network 110a to stop distributing traffic for the wireless access terminals 115a-115h to the wireless network 110b. Accordingly, communications on the wireless network 110a to the wireless access terminals 115a-115h may include the RSSI threshold for the wireless network 110b. If more than one co-located wireless networks 110a-110b exist, then an RSSI threshold for each of the co-located wireless networks 110a-110b may be communicated to the associated wireless access terminals 115a-115h. If one of the wireless access terminals 115a-115h determines that its RSSI on the first wireless network 110a is below the RSSI threshold for the wireless network 110b, the wireless access terminals 115a-115h may being scanning for or may increase the frequency of scanning for the wireless network 110b. If one of the wireless access terminal 115a-115h is unable to see beacons from the wireless network 110b, then the wireless access terminal 115a-115h may determine that it has left the coverage area of the wireless network 110b and may indicate to the access point 105b via the wireless network 110a to stop distributing traffic destined for the wireless access terminal 115a-115h to the wireless network 110b and instead distribute the traffic on the wireless network 110a or on another wireless network 110b which the wireless access terminal 115a-115h can still see.

Additionally, the access points 105a-105b may endeavor to save power and reduce its beacon impact on neighbor cells by only broadcasting beacons on its wireless network 110a-110b when the access point 105a-105b is aware that wireless access terminals 115a-115h are within the range or proximal to the range of the wireless network 110a-110b. For example, the access point 105a-105b may cease all signal processing on a wireless network 110a-110b to save power when it is aware that no wireless access terminals 115a-115h exist within its range. This power saving feature may be especially useful when the co-located access points 105a-105b are battery powered, e.g., on a portable device. Accordingly, the access point 105a-105b may develop methods for detecting when the wireless access terminals 115a-115h are within the range of or proximal to the range of its wireless network 110a-110b. In some embodiments, the access point 105a-105b may participate in communications on multiple wireless networks 110a-110b and determine when the wireless access terminals 115a-115h are within overlapping coverage areas of more than one of the multiple wireless networks 110a-110b. In other embodiments, the access point 105a may participate in communications on only a single wireless network 110a and may communicate with another access point 105b communicating on another wireless network 110b to determine when the wireless access terminals 115a-115h may be within the range of its wireless network 110a.

For example, the access point 105a may communicate with the access point 105b to determine when the wireless access terminals 115a-115h may be near the coverage area of the access point 105a. In some embodiments, the access point 105a may determine that the wireless access terminals 115a-115h are near or within the range of the wireless network 110a when the wireless access terminal 115 is associated with a wireless network 110b. For example, the access point 105a, co-located with access point 105b, may determine that the wireless access terminal 115d is within the coverage area (wireless network 110a) based on the indication from the access point 105b that the wireless access terminal 115d is associated with the wireless network 110b.

In some other embodiments, the access point 105a may determine that one of the wireless access terminals 115a-115h is near or within the range of the wireless network 110b when the wireless access terminal 115a-115h is associated with the wireless network 110a and the RSSI on the wireless network 110a is above a threshold. The threshold may indicate the limit at or above which one of the wireless access terminal 115a-115h is within the range of the wireless network 110b, or may indicate a level at or above which the wireless access terminal 115a-115h is likely to be within the range of the wireless network 110b. The access point 105a may determine the RSSI on the wireless network 110a by measuring it in uplink connections with the wireless access terminal 115a-115h or via downlink connections with the wireless access terminal 115a-115h when the wireless access terminal 115a-115h provides the RSSI in feedback communications with the access point 105a. In some embodiments, the RSSI may be measured via both the uplink and downlink connections. For example, access point 105b may determine that the wireless access terminal 115c is within its coverage area (wireless network 110b) based on a notification from access point 105a that the wireless access terminal 115c is associated with the wireless network 110a with an RSSI that is above a specific threshold, the threshold being the minimum RSSI necessary in order to be within the range of the wireless access terminal 110b. Accordingly, the access point 105b may determine that the wireless access terminal 115c is within the coverage area of wireless network 110b.

In other embodiments, the access point 105bmay receive at least one of a probe request or an association request, or a probe request and an association request, or only one of a probe request and an association request, from one of the wireless access terminals 115a-115h on the wireless network 110b, and may determine from the request that the wireless access terminal 115a-115h is within the range of the wireless network 110b. The accessible wireless access terminal 115a-115h may be identified by authentication procedures on the wireless network 110a and may be issued tokens or other identifiers on the wireless network 110a, and the issuing history can be memorized by access point 105a. Then, the history about issuing these tokens or other identifiers may be utilized on the wireless network 110b to verify the accessibility of the wireless access terminals 115a-115h. In some embodiments, the access point 105b may determine the wireless access terminals 115a-115h are within the range of the wireless network 110b when the wireless access terminal 115a-115h may already be associated with the wireless network 110b. Accordingly, once the access point 105b determines that the wireless access terminal 115a-115h may be within the range of or is near the range of the wireless network 110b, the access point 105b may begin broadcasting beacons on the wireless network 110b.

Where both the access points 105a-105b and the wireless access terminals 115a-115h are capable of MBS communications, some embodiments may comprise access points 105a-105b operating on multiple bands (e.g., wireless networks 110a-110b). When the access point 105a provides two or more wireless networks 110a-110b, one may have a larger coverage area than another of the wireless networks 110a-110b from the access point 105a. In some embodiments, the access point 105a may introduce a beaconing system across all wireless networks 110a-110b to allow the wireless access terminals 115a-115h to save power and to minimize the total beacon load across each of the wireless networks 110a-110b and at the wireless access terminals 115a-115h. The beaconing system may comprise hierarchical beacons, wherein the amount of information contained within the beacon for a wireless network 110a-110b may be based on the wireless network 110a-110b and its coverage area. The hierarchical beacon system may instruct the access point 105a to broadcast a multi-BSSID beacon on the first wireless network 110a (i.e., the wireless network 110a or 110b with the largest range), where the multi-BSSID beacon may comprise the necessary management information for all other wireless networks 110a-110b provided by the access point 105a. This management information may include at least one of paging information, configuration commands, controllable parameters, or channel information for co-located wireless networks, among others. The access point 105a may then broadcast short beacons on the second wireless network 110b to reduce the total beacon load for the wireless access terminals 115a-115h that participate on both the wireless networks 110a-110b. A short beacon may be characterized as containing less information than a non-MBS beacon used for network communications between the wireless access terminals 115a-115h and the access point 105a, wherein a non-MBS beacon may comprise all information and indicators necessary to establish and maintain communications on the wireless networks 110a-110b. When the hierarchical beacon system is utilized, the wireless access terminals 115a-115h may only monitor the short beacons on the wireless network 110b to measure the link quality on the wireless network 110b on an infrequent basis. Accordingly, the wireless access terminals 115a-115h save power by regularly monitoring only the multi-BSSID beacons on the wireless network 110a and infrequently monitoring the wireless network 110b.

For example, the wireless network 110a may have the largest coverage area as generated by the access point 105a and may broadcast the multi-BSSID beacon to associated wireless access terminals 115a-115h. Since the multi-BSSID beacon may comprise all the management information for all the co-located wireless networks generated by the same access point 105a, the associated wireless access terminals 115a-115h may monitor only the multi-BSSID beacon on the wireless network 110a in order to obtain all the critical management information related to both the wireless networks 110a and 110b to which they may belong that are provided by the access point 105a. While the multi-BSSID beacon is broadcast on the wireless network 110a, short beacons may be broadcast on the wireless network 110b. As all critical management information for all wireless networks 110a-110b may be provided in the multi-BSSID beacon being broadcast on the wireless network 110a, the wireless access terminals 115a-115h associated with both wireless networks 110a and 110b (e.g., wireless access terminal 115c and 115d) may wake up to monitor the wireless network 110a to obtain all the necessary management information for both the wireless networks 110a and 110b to which the wireless access terminals 115c and 115d belong. As discussed above, the wireless access terminals 115c and 115d may only monitor the short beacons on the wireless network 110b to verify the link quality on the wireless network 110b. When more than two wireless networks 110 are provided by the same access point 105, the multi-BSSID beacon containing management information for all the wireless networks 110a-110b will be broadcast on the wireless network 110a (e.g., wireless network 110a or 110b with the largest coverage area or with the largest available bandwidth), and each of the other wireless networks 110b will broadcast short beacons. In some embodiments, the short beacons may comprise at least one of a null data packet, a modified preamble with the BSSID in the SIG field, or a physical layer sequence mapped to the BSSID.

However, the hierarchical beacon system may not be useful for wireless access terminals 115a-115h that are unable to participate in MBS communications because these wireless access terminals 115a-115h may be unable to simultaneously communicate on multiple wireless networks 110a-110b or may be unable to understand the different beacons. Accordingly, the MBS capable access point 105a may determine if there exists any wireless access terminals 115a-115h within the range of the access point 105a that is unable to participate in MBS communications or if there are no wireless access terminals 115 within the range of the access point 105a. In either case, the access point 105a may replace the hierarchical beacons with non-MBS beacons on each wireless network 110a-110b. In some embodiments, the wireless access terminals 115a-115h unable to participate in MBS communications may be unable to understand the multi-BSSID on the wireless network 110a or the short beacon on the wireless network 110b, and the hierarchical beacon system may not provide the benefits of power reduction and minimizing total beacon load for these non-MBS wireless access terminals 115a-115h.

Alternatively, the access point 105a may always broadcast the multi-BSSID beacon on the wireless network 110a for wireless access terminals capable of MBS communications and alternate between short beacons and non-MBS beacons on the wireless network 110b dependent upon the existence of non-MBS capable wireless access terminals 115a-115h. When all wireless access terminals 115a-115h are MBS-capable, then the access point 105a may broadcast the short beacon on the wireless network 110b, and when any of the wireless access terminals 115a-115h are not MBS-capable, then the access point 105a may broadcast non-MBS beacons on the wireless network 110b. The wireless access terminals 115a-115h may indicate their ability or inability to participate in MBS communications in the probe or association request received from the wireless access terminals 115a-115h by the access point 105a on the wireless network 110a.

In some embodiments, when no wireless access terminals 115a-115h exist within the range of the access point 105a, the access point 105a may not broadcast any beacons on the wireless network 110b until it receives an indication that one of the wireless access terminals 115a-115h enters the wireless network 110b coverage area, when the access point 105a may determine whether to broadcast a short beacon or a non-MBS beacon based on the MBS capabilities of the wireless access terminals 115a-115h.

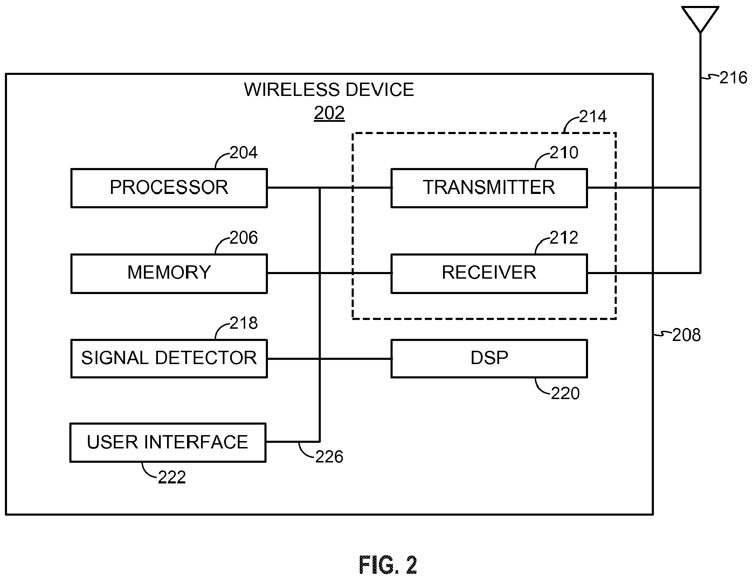

FIG. 2 illustrates various components that may be utilized in a wireless access terminal 202 that may be employed within the wireless communication system 100. The wireless access terminal 202 is an example of a device that may be configured to implement the various methods described herein. For example, the wireless access terminal 202 may comprise the access point 105, or one of wireless access terminals 115a-115h, for example.

The wireless access terminal 202 may include a processor 204 which controls operation of the wireless access terminal 202. The processor 204 may also be referred to as a central processing unit (CPU), a hardware processor, or a processing system. Memory 206, which may include both read-only memory (ROM) and random access memory (RAM), provides instructions and data to the processor 204. A portion of the memory 206 may also include non-volatile random access memory (NVRAM). The processor 204 performs logical and arithmetic operations based on program instructions stored within the memory 206. The instructions in the memory 206 may be executable to implement the methods described herein.

The processor 204 may comprise or be a component of a processing system implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include non-transitory computer-readable medium comprising code that, when executed, causes an apparatus to perform one or more steps associated with one or more methods for modifying relay operation of a relay-compatible wireless device. Code may include source code format, binary code format, executable code format, or any other suitable format of code. The code, or instructions, when executed by one or more processors, causes the processing system to perform the various functions described herein.

The wireless access terminal 202 may also include a transmitter 210 and a receiver 212 to allow transmission and reception of data between the wireless access terminal 202 and a remote location. Further, the transmitters 210 and the receiver 212 may be configured to allow transmission and reception of setup and/or configuration packets or frames between the wireless access terminal 202 and a remote location including, for example, an AP, a relay device, or an STA. The transmitter 210 and receiver 212 may be combined into a transceiver 214. An antenna 216 may be attached to the housing 208 and electrically coupled to the transceiver 214. Alternatively, or additionally, the wireless access terminal 202 may include an antenna 216 formed as part of the housing 208 or may be an internal antenna. The wireless access terminal 202 may also include (not shown) multiple transmitters, multiple receivers, multiple transceivers, and/or multiple antennas.

The wireless access terminal 202 may also include a signal detector 218 that may be used in an effort to detect and quantify the level of signals received by the transceiver 214. The signal detector 218 may detect such signals as total energy, energy per subcarrier per symbol, power spectral density and other signals. The wireless access terminal 202 may also include a digital signal processor (DSP) 220 for use in processing signals. The DSP 220 may be configured to generate a data unit for transmission. In some aspects, the data unit may comprise a physical layer data unit (PPDU). In some aspects, the PPDU is referred to as a packet or a frame.

The wireless access terminal 202 may further comprise a user interface 222 in some aspects. The user interface 222 may comprise a keypad, a microphone, a speaker, and/or a display. The user interface 222 may include any element or component that conveys information to a user of the wireless access terminal 202 and/or receives input from the user.

The various components of the wireless access terminal 202 may be housed within a housing 208. Further, the various components of the wireless access terminal 202 may be coupled together by a bus system 226. The bus system 226 may include a data bus, for example, as well as a power bus, a control signal bus, and a status signal bus in addition to the data bus. Those of skill in the art will appreciate the components of the wireless access terminal 202 may be coupled together, or may accept or provide inputs to each other using some other mechanism.

Although a number of separate components are illustrated in FIG. 2, those of skill in the art will recognize that one or more of the components may be combined or commonly implemented. For example, the processor 204 may be used to implement not only the functionality described above with respect to the processor 204, but also to implement the functionality described above with respect to the signal detector 218 and/or the DSP 220. Further, each of the components illustrated in FIG. 2 may be implemented using a plurality of separate elements.

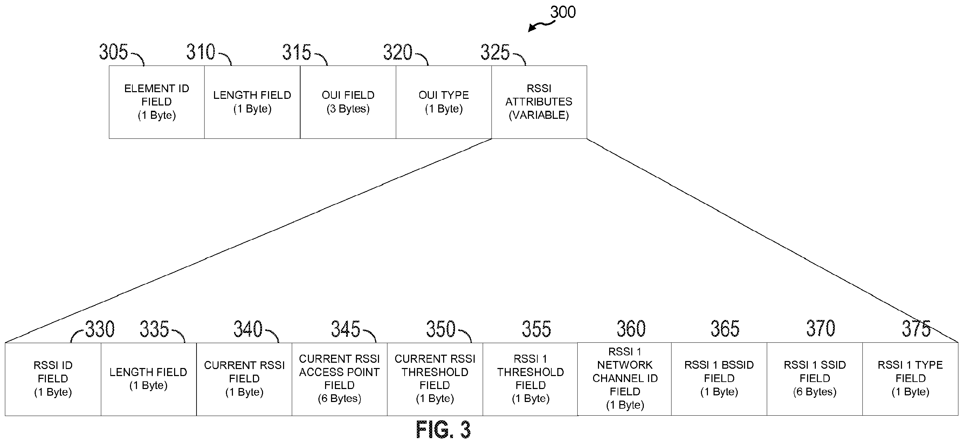

FIG. 3 illustrates an embodiment of the structure of a message which may be used to communicate signal strength criterion between devices of FIG. 1, specifically the access points 105a-105b and the wireless access terminals 115a-115h. However, in some embodiments, messages of this or similar structure may be used to communicate criterion and associated information between wireless access terminals 115a-115h. FIG. 3 shows an embodiment of a signal strength information element (IE) 300 for communicating RSSI attributes of the wireless access terminals 115a-115h to another wireless access terminal 115a-115h or the access points 105a-105b. Those skilled in the art will appreciate that the signal strength IE 300 may have more or fewer components than illustrated in FIG. 3. As shown, the signal strength IE 300 includes a sampling of elements useful for describing some prominent features of implementations within the scope of the claims and may include one or more additional fields that are not shown or may include one or more fields that may not be utilized in all embodiments. The signal strength IE 300 includes an element ID field 305, which may be 1 byte in length, for example, and may include an integer value identifying the specific signal strength IE 300. The signal strength IE 300 may further include a length field 310, which may also be 1 byte in length, and which may include an integer value indicating the length, in octets, of the following fields in the signal strength IE 300. The value of the signal strength IE 300 length field as depicted, for example, may be 4 plus the total length of the RSSI attributes 325. The signal strength IE 300 may further include an organizationally unique identifier (OUI) field 315, which may be 3 bytes in length, and may include an integer value representing a Wi-Fi Alliance (WFA) or vendor specific OUI. The signal strength IE 300 may further include an OUI type field 320, which may be 1 byte in length, and may include a value identifying the type and/or version of the signal strength IE 300. The signal strength IE 300 may further include a RSSI attributes field 325, which may be of variable length and may contain RSSI attributes therein.

As shown in FIG. 3, RSSI attributes field 325, which may be contained within signal strength IE 300, may include RSSI ID field 330, which may be 1 byte in length, which may contain a value of "1" indicating the type of signal strength attribute being a signal strength attribute. The signal strength attribute field 325 may also include a length field 335 of 1 byte, which may include an integer value indicating the length of the fields following in the attribute. The signal strength attribute field 325 may include a current RSSI field 340 of 1 byte which may indicate the current signal strength, as measured by an access point 105a-105b or a third party device, between one of the wireless access terminals 115a-115h receiving this signal strength IE 300 and the access point 105a-105b indicated in the following field, the current RSSI access point BSSID field 345. In other embodiments, the signal strength attribute field 340 may not be used and may be eliminated from the RSSI attributes field 325 when the RSSI of the wireless access terminals 115a-115h measure their respective RSSI themselves. The current RSSI access point BSSID field 345 may be of multiple of 6 bytes in length and may contain identifying information for the one or more access points 105a-105b with which the wireless access terminal 115a-115h has the indicated RSSI(s), for example the BSSID of the current access points 105a-105b. The signal strength attribute field 325 may also include a current RSSI threshold field 350 of length 1 byte which may include the current RSSI threshold of the wireless access terminal 115a-115h. This RSSI threshold may comprise the threshold of the signal strength of the wireless access terminals 115a-115h that must be maintained in order to maintain the association with the current access point. For example, if the current RSSI threshold field 350 comprises a value of 300 mW or 15 dBm, or in some arbitrary units, the current RSSI field likely contains a value greater than 300 mW or 15 dBm as the wireless access terminal 115a-115h is associated with current access point 105a-105b. The signal strength attribute field 325 may also include an RSSI 1 Threshold field 355 of length 1 byte, which may include an integer value indicating the RSSI threshold for an access point 105b that is not the current access point 105a. The signal strength attribute field 325 may also include an RSSI 1 network channel ID field 360 of length 1 byte, which may include an integer value indicating the channel on which the access point 105b is communicating. The signal strength attribute field 325 may also include an RSSI 1 BSSID field 365 of a length of 6 bytes, which may include an integer value indicating the BSSID for the access point 105b. The signal strength attribute field 325 may also include an RSSI 1 SSID field 370 of length 6 bytes, which may include an integer value indicating the SSID for the access point 105b. The signal strength attribute field 325 may further include an RSSI 1 type field 375, where a value of "1" may indicate that the wireless access terminal 115a-115h is entering the access point 105b coverage area if the RSSI from communications between the wireless access terminal 115a-115h and access point 105a is above this threshold, and a value of "0" may indicate that the wireless access terminal 115a-115h is leaving the access point 105b coverage if the RSSI from communications between the wireless access terminal 115a-115h and access point 105a is below this threshold. In some embodiments, the thresholds for entering or leaving the coverage of access point 105b may be different. Additionally, the structure of the RSSI attributes of the signal strength attribute field 325 may be formatted such that the most important field for signal strength criterion is located in a specific location in the attribute.

As discussed briefly above, a communication from the access point 105a-105b may comprise information regarding other access points 105a-105b and wireless networks 110a-110b with which the range from the access point 105a-105b may overlap. Accordingly, signal strength IE 300 as described above may include the information regarding all co-located access points 105a-105b and wireless networks 110a-110b. The RSSI attributes 325 may be expanded to include RSSI X threshold fields, RSSI X network channel ID fields, and RSSI X BSSID fields for each of the co-located access points 105a-105b and wireless networks 110a-110b, where "X" may be replaced with each co-located access point 105a-105b. In situations where the coverage area of a co-located access point 105a-105b or wireless network 110a-110b is greater than the coverage area of the current access point 105a-105b, the RSSI X threshold field may be set to a value of negative infinity, so as to indicate that the wireless access terminal 115a-115h is within the range of the co-located access point 105a-105b or wireless network 110a-110b anytime it is within the range of the current access point 105a-105b.

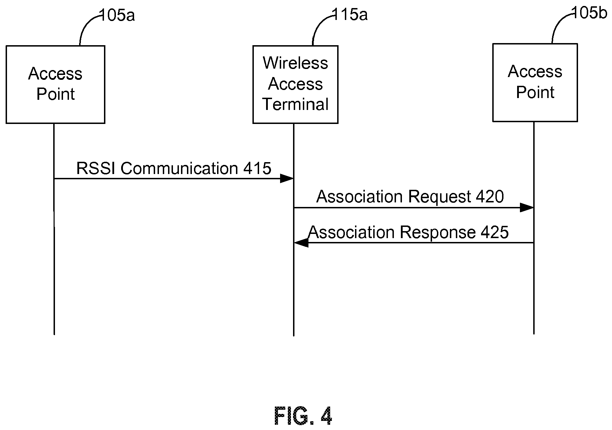

FIG 4 illustrates the communications exchanged between a wireless access terminal 115a and the access point 105a. FIG. 4 is a call flow diagram of a method for the wireless access terminal 115a (e.g., node or wireless access terminal 115a-115h) to determine if it is within the range of a wireless network 110a via communications with a wireless network 110b and, if the wireless access terminal 115a is within the range of the wireless network 110a, associate with the wireless network 110a, in accordance with one implementation, and generally designated 400a. In one embodiment, the determination if the wireless access terminal 115a is within the range of the wireless network 110a may begin with the determination or receipt of the signal strength IE 300 discussed above from the access point 410a (corresponding to one of access points 105a-105b). As shown in Figure 4, wireless access terminal 115a may receive a communication from first access point 105a in the form of RSSI communication 415, which may be of the signal strength IE 300 structure. The wireless access terminal 115a may receive the RSSI communication 415 and identify or determine from the RSSI communication 415 the wireless access terminal 115a RSSI with the first access point 105a and a signal strength criterion and the access point 105a identifier necessary to be met in order to create an association with the second access point 105b, i.e., the integer value in RSSI 1 threshold field 355 of the signal strength IE 300 described above. After identifying the RSSI 1 threshold field 355 and the identifier in RSSI 1 network channel ID field 360 and the RSSI 1 threshold type field 375 with type "1" (as discussed above), the wireless access terminal 115a may determine whether its current signal strength satisfies the criterion; if the criterion is satisfied, the wireless access terminal 115a may scan for the second access point 105b on the channel indicated in the signal strength IE 300. If the criterion is not satisfied, then the wireless access terminal 115a may refrain from scanning or reduce is scanning frequency for the second access point 105b in order to save energy and not wastefully scan when it is outside the range of the second access point 105b. Thus, if the criterion is satisfied, wireless access terminal 115a may scan for access point 105b and submit an association request 420, and since the criterion is satisfied and the wireless access terminal 115 is within the range of access point 105b, the access point 105b may provide an association response 425 allowing or rejecting the association. Similarly if the RSSI 1 threshold type field 375 is "0" and the current RSSI is below the threshold, wireless access terminal 115a may start scanning or increase its scanning frequency for access point 105b to determine when it leaves the coverage area of wireless network 110b. If beacons from access point 105b cannot be detected, then the wireless access terminal 115a will request, via access point 105a with which the wireless access terminal 115a may still communicate, that data is not distributed on access point 105b and may also send a disassociation frame to AP 105b.

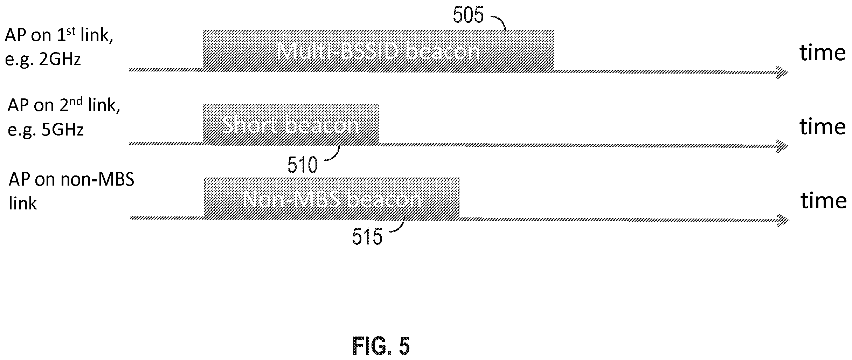

FIG. 5 illustrates embodiments of the variety of beacon messages that may be generated and transmitted by an access point on multiple wireless networks on which the access point communicates. Multi-BSSID beacon 505 represents the multi-BSSID beacon that may be generated and transmitted on a wireless network 110a by an access point 105 a or 105b capable of MBS communications when the wireless access terminals 115a-115h are also capable of MBS communications. The short beacon 510 represents the short beacons that may be generated and transmitted on a wireless network 110b by an access point 105a or 105b when all associated access points and wireless access terminals are capable of MBS communications. The multi-BSSID beacon 505 may comprise the management information for all wireless networks 110a-110b with which the access point 105a communicates. The short beacons 510 may comprise minimal management information and may be used by wireless access terminals 115a-115h to verify the link quality of the wireless network 110b on an infrequent basis.

As discussed above, if all of the wireless access terminals 115a-115h are not capable of MBS communications, then the access point 105a or 105b may choose to continue to generate and broadcast the multi-BSSID beacon 505 on the wireless network 110a or broadcast a non-MBS beacon 515 containing only the information for the wireless network 110a. The non-MBS beacon 515 may comprise the critical management information for the wireless network 110a or 110b on which the non-MBS beacon 515 is being broadcast, and may not comprise information regarding other wireless networks 110. Regardless of the determination to generate and broadcast the multi-BSSID beacon on the wireless network 110a, the access point 105a or 105b may generate and broadcast non-MBS beacons on the wireless network 110b instead of the short beacons 510. These non-MBS beacons 515 may be necessary in embodiments where at least one of the wireless access terminals 115a-115h is unable to understand the short beacons 510. Accordingly, the non-MBS beacons 515 may provide the necessary information to the non-MBS capable wireless access terminals 115a-115h such that they may communicate on the wireless network 110b.

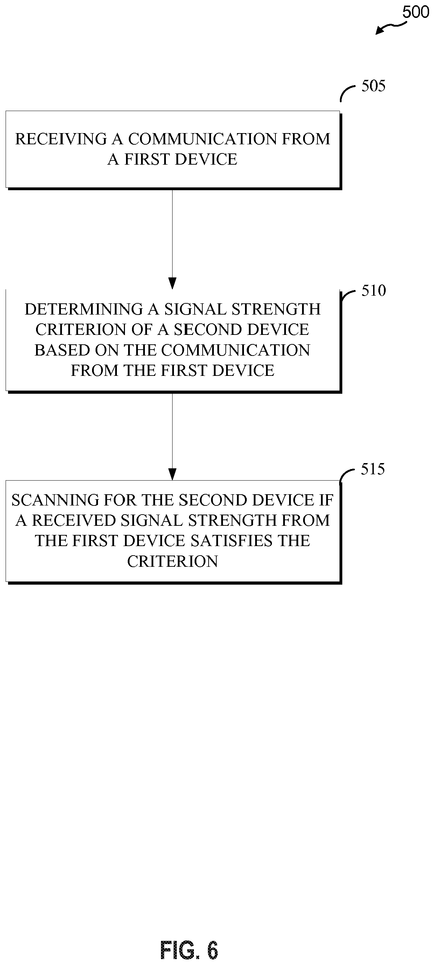

FIG. 6 represents a flowchart of a method for scanning for a wireless network 110b based on satisfying criteria on a wireless network 110a as performed by the wireless access terminal 115 (or another apparatus). In an embodiment, a wireless access terminal 115a-115h, for example wireless access terminal 115a, may perform the method 600. In block 605, the wireless access terminal 115d may receive a communication from the access point 105a. The communication may comprise the RSSI between the wireless access terminal 115d and the access point 105a and criterion comprising a threshold RSSI for the access point 105b, above which the wireless access terminal 115d may scan for the access point 105b. At block 610, the wireless access terminal 115d may identify and determine the criterion of the access point 105b and determine if the criterion is met based on the RSSI between the wireless access terminal 115d and the access point 105a. If the criterion is satisfied (i.e., the RSSI between the wireless access terminal 115d and the access point 105a is greater than or below the RSSI threshold for the access point 105b), then the wireless access terminal 115d may determine it may scan for the wireless network 110b of access point 105b. At block 615, the wireless access terminal 115d may begin scanning for the access point 105b based on the RSSI between the wireless access terminal 115d and the access point 105a being above the threshold RSSI for the access point 105b.

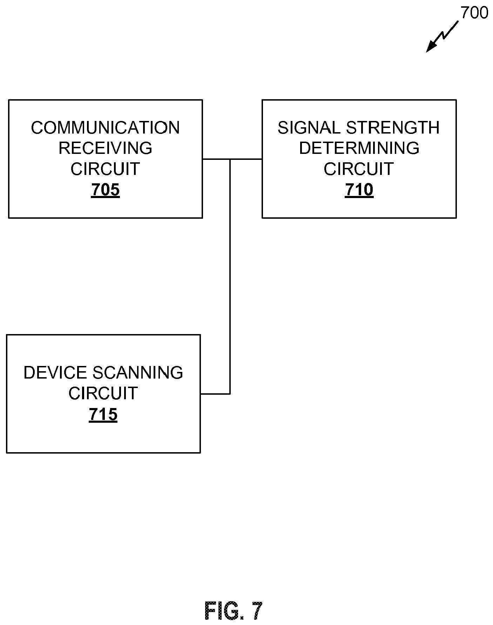

FIG. 7 is a functional block diagram of a wireless communication access terminal that may be employed within the wireless communication system of FIG. 1. Those skilled in the art will appreciate that a wireless access terminal may have more components than the simplified wireless access terminal 700 shown in FIG. 7. The wireless access terminal 700 shown includes only those components useful for describing some prominent features of implementations within the scope of the claims. The wireless access terminal 700 may include a communication receiving circuit 705, a signal strength determining circuit 710, and a device scanning circuit 715.

In some aspects, one or more of the communication receiving circuit 705, the signal strength determining circuit 710, and/or the device scanning circuit 715 may be implemented within one or more of the wireless access terminal 115a-115h discussed above.

In some implementations, the communication receiving circuit 705 may be configured to perform one or more of the functions discussed above with respect to block 605. The communication receiving circuit 705 may include one or more of a programmable chip, a processor, a memory, a receiver and a network interface. For example, the communication receiving circuit 705 may include the processor 204 and the receiver 212, or a transceiver 214. In some implementations, means for receiving a communication and/or means for communicating may include the communication receiving circuit 705.

In some implementations, the signal strength determining circuit 710 may be configured to perform one or more functions discussed above with respect to block 610. The signal strength determining circuit 710 may include one or more of a programmable chip, a processor, a memory, a user interface, and a network interface. For example, the signal strength determining circuit 710 may include the processor 204 and the memory 206, among others. In some implementations, means for determining a signal strength based on a signal strength threshold, and/or means for determining whether a signal strength exceeds a criterion, and/or means for determining a signal strength may include the signal strength determining circuit 710.

In some implementations, the device scanning circuit 715 may be configured to perform one or more functions discussed above with respect to block 615. The device scanning circuit 715 may include one or more of a programmable chip, a processor, a memory, a user interface, and a network interface. For example, the device scanning circuit 715 may include the processor 204, the memory 206, transceiver 214, receiver 212, transmitter 210, and/or the user interface 222. In some implementations, means for scanning for a device and means for scanning may include the device scanning circuit 715.

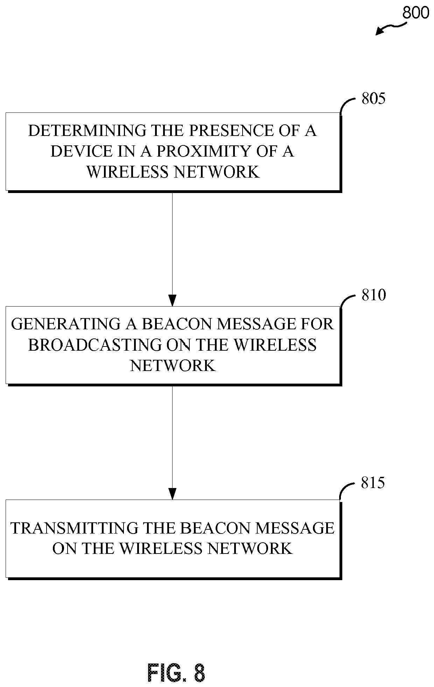

FIG. 8 represents a flowchart of a method for saving power at the access point by generating a beacon message and/or turning on the access point 105b on a wireless network 110b based on determining a device is in proximity with or within the coverage area of the wireless network 110b. In an embodiment, one of the access points 105a-105b, for example access point 105b, may perform the method 800. In block 805, the access point 105b may determine whether a device (e.g., wireless access terminal 115a-115h) is present in a proximity of the wireless network 110b. As described above, the access point 105b may determine that the device is within the proximity of the wireless network 110b by identifying that the device is associated on a wireless network 110a. Alternatively, the access point 105b may determine that the device is associated on the wireless network 110a with an RSSI that is greater than the threshold for wireless network 110b. Additionally, the access point 105b may determine that the device is within the range of the wireless network 110b if the access point 105b receives a probe/association request on wireless network 110b from the device or if the device is associated with the access point 105b on the wireless network 110b.

At block 810, the access point 105b may generate a beacon message to broadcast on the wireless network 110b. The beacon message will be generated after the access point 105b determines that a device is present in the proximity of the wireless network 110b. At block 815, the access point 105b may broadcast the beacon message and/or turn on the access point 105b on the wireless network 110b, knowing that a device is present near the wireless network 110b and may be able to scan for the beacon message. "Turning on" the access point 105b may comprise activating at least one of the transmitter or the receiver of the access point 105b such that they are capable of operating as designed. The transmitter and/or receiver of the access point 105b may be activated by the access point 105a if the access point 105a detects a wireless access terminal 115a-115h within the proximity of the access point 105b. In another embodiment, the access point 105 may activate its transmitter if the receiver (the receiver may already be activated) detects a wireless access terminal 115a-115h within the proximity of the access point 105b.

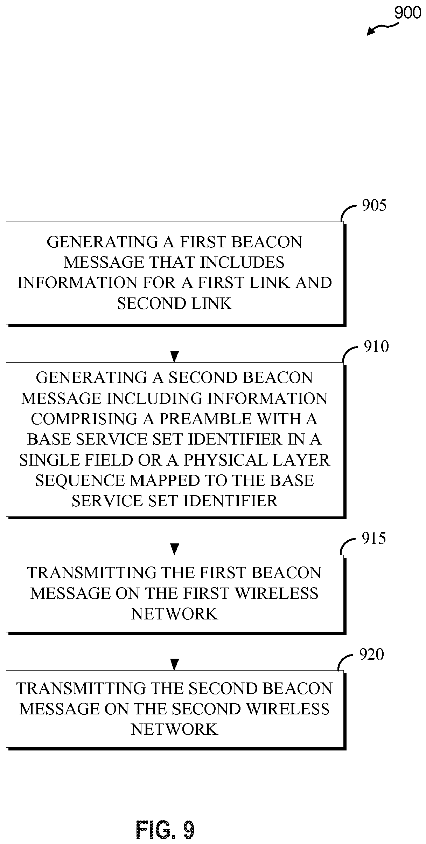

FIG. 9 represents a flowchart of a method for saving power at the access point by generating a hierarchical beacon message on a wireless network 110a comprising information for at least one wireless network 110b based on determining that all devices present within the coverage area of the wireless networks 110a-110b are capable of multi-band simultaneous communications. In an embodiment, the access point 105a-105b, for example access point 105a, may perform the method 900. In block 905, the access point 105a determines that all the devices within the associated wireless networks 110a-110b are capable of MBS communications, then the access point 105a generates a first beacon message that includes information for a first wireless network 110a and second wireless network 110b. The first beacon message may comprise the multi-BSSID beacon containing management information for all the wireless networks 110a-110b. In block 910, the access point 105a may generate a second beacon message including information comprising a preamble with a basic service set identifier in a single field or a physical layer sequence mapped to the basic service set identifier. The second beacon message may comprise information such as a null data bracket or a physical layer sequence mapping to the BSSID. As discussed above, the second beacon message may be monitored by the device infrequently due to there being no time critical management information communicated thereon. If multiple wireless networks 110b exist, then the second beacon messages may be generated for each of the wireless networks 110b that are not the wireless network 110a.

In block 915, the access point 105a may transmit the first beacon message on the wireless network 110a, such that all devices on any of the wireless networks 110a-110b are able to receive the critical management information for all associated wireless networks 110a-110b, because all that information may be contained within the multi-BSSID beacon broadcast on wireless network 110a. At block 920, the access point 105a may transmit the second beacon message on the wireless network 110b, such that all devices on any of the wireless networks 110a-110b may rely upon the second beacon messages to measure the link quality on the wireless access point 110b.

As discussed above, if any devices within the wireless networks 110a-110b are unable to participate in MBS communications, then the access point 105a may replace both the first beacon messages and the second beacon message with a third beacon message (comprising individualized critical management information for each wireless network 110a-110b) on all wireless networks 110a-110b. 110a. Additionally, the access point 105a may determine that the device is within the range of the wireless network 110a if the access point 105a receives a probe/association request on wireless network 110a from the device or if the device is associated with the access point 105a on the wireless network 110a.

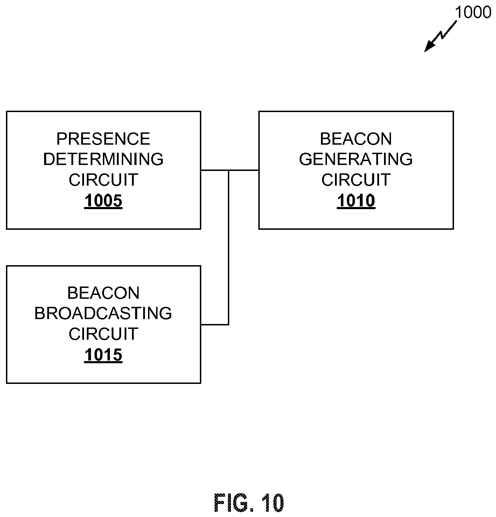

FIG. 10 is a functional block diagram of a wireless communication access terminal that may be employed within the wireless communication system of FIG. 1. Those skilled in the art will appreciate that a wireless access terminal 115 may have more components than the simplified wireless access terminal 1000 shown in FIG. 10. The wireless access terminal 1000 shown includes only those components useful for describing some prominent features of implementations within the scope of the claims. The wireless access terminal 1000 may include a presence determining circuit 1005, a beacon generating circuit 1010, and a beacon broadcasting circuit 1015.

In some aspects, one or more of the presence determining circuit 1005, the beacon generating circuit 1010, and/or the beacon broadcasting circuit 1015 may be implemented within one or more of the access points 1 05a-1 05b discussed above.

In some implementations, the presence determining circuit 1005 may be configured to perform one or more of the functions discussed above with respect to blocks 805 or 905. The presence determining circuit 1005 may include one or more of a programmable chip, a processor, a memory, a receiver and a network interface. For example, the presence determining circuit 1005 may include the processor 204, a memory 206, the receiver 212, and/or a transceiver 214. In some implementations, means determining the presence of a device and/or means for detecting a device may include the presence determining circuit 1005.

In some implementations, the beacon generating circuit 1010 may be configured to perform one or more functions discussed above with respect to blocks 810, 910, and 920. The beacon generating circuit 1010 may include one or more of a programmable chip, a processor, a memory, a user interface, and a network interface. For example, the beacon generating circuit 1010 may include the processor 204, the user interface 222, and the memory 206, among others. In some implementations, means for generating a beacon message, and/or means for developing a beacon message, and/or means for creating a beacon message may include the beacon generating circuit 1010.

In some implementations, the beacon broadcasting circuit 1015 may be configured to perform one or more functions discussed above with respect to blocks 815, 915, and 925. The beacon broadcasting circuit 1015 may include one or more of a programmable chip, a processor, a memory, a user interface, and a network interface. For example, the beacon broadcasting circuit 1015 may include the processor 204, the memory 206, transceiver 214, receiver 212, transmitter 210, and/or the user interface 222. In some implementations, means for transmitting a beacon message and means for broadcasting a beacon message may include the beacon broadcasting circuit 1015.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like. Further, a "channel width" as used herein may encompass or may also be referred to as a bandwidth in certain aspects.

As used herein, a phrase referring to "at least one of' a list of items refers to any combination of those items, including single members. As an example, "at least one of: a, b, or c" is intended to cover: a, b, c, a-b, a-c, b-c, and a-b-c.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk, and Blu-ray® disc where disks usually reproduce data magnetically, while discs reproduce data optically with lasers. Thus, in some aspects, computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to aspects of the present disclosure, other and further aspects of the disclosure may be devised without departing from the basic scope thereof, and the scope thereof is determined by the claims that follow.

### In the following, further embodiments are described to facilitate the understanding of the invention:

1. An apparatus for communicating, comprising:
   a processing system configured to determine a signal strength criterion of a first device based on a communication from a second device and scan for the first device if a received signal strength from the second device satisfies the signal strength criterion.
2. The apparatus of Embodiment 1, wherein the signal strength criterion is determined based on a received information element via the communication.
3. The apparatus of Embodiment 1, wherein the processing system is further configured to identify the received signal strength based on the communication from the second device.
4. The apparatus of Embodiment 1, wherein the determined signal strength criterion of the first device comprises a threshold, and wherein the processing system is further configured to determine whether the received signal strength is equal to or above the threshold.
5. The apparatus of Embodiment 1, wherein the processing system is further configured to identify, based on the communication, a channel number associated with a channel on which the first device operates and wherein the scan comprises scanning the channel for the first device.
6. The apparatus of Embodiment 1, wherein the processing system is further configured to identify, based on the communication, a basic service set identification associated with the first device and wherein the scan comprises scanning for the first device based on the identified basic service set identification.
7. The apparatus of Embodiment 1, wherein the processing system is further configured to determine whether the apparatus is exiting a coverage area of the first device based on at least one of the signal strength criterion of the first device or the received signal strength from the second device.
8. The apparatus of Embodiment 1, wherein the processing system is further configured to scan for a beacon from the first device when the received signal strength from the second device satisfies the signal strength criterion and to determine whether the apparatus is outside a coverage area of the first device when the scan for the beacon does not detect the beacon from the first device.
9. The apparatus of Embodiment 1, wherein the processing system is further configured to determine whether the apparatus has exited a coverage area of the first device and generate a message to the second device indicating the first device should stop distributing data to the apparatus based on a determination that the apparatus is outside the coverage area of the first device.
10. A method for communicating by an apparatus, comprising:
   receiving a communication from a first device;
   determining a signal strength criterion of a second device based on the communication from the first device; and
   scanning for the second device if a received signal strength from the first device satisfies the criterion.
11. The method of Embodiment 10, wherein determining a signal strength criterion comprises identifying the signal strength criterion in a received information element via the communication from the first device.
12. The method of Embodiment 10, further comprising identifying the received signal strength based on the communication from the first device.
13. The method of Embodiment 10, further comprising determining whether the received signal strength is equal to or above a threshold, wherein the signal strength criterion of the second device comprises the threshold.
14. The method of Embodiment 10, further comprising identifying, based on the communication from the first device, a channel number associated with a channel on which the second device operates, wherein scanning for the second device comprises scanning for the second devices on the channel identified based on the communication from the first device.
15. The method of Embodiment 10, further comprising identifying, based on the communication from the first device, a basic service set identification associated with the first device, wherein scanning for the second device comprises scanning for the second device based on the identified basic service set identification.
16. The method of Embodiment 10, further comprising determining whether an apparatus is exiting a coverage area of the second device based on at least one of the signal strength criterion of the second device or the received signal strength from the first device.
17. The method of Embodiment 10, further comprising scanning for a beacon from the second device when the received signal strength from the first second device satisfies the signal strength criterion and determining whether the apparatus is outside the coverage area of the second device when the scanning for a beacon does not detect the beacon from the second device.
18. The method of Embodiment 10, further comprising determining whether the apparatus has exited a coverage area of the second device and generating a message to the first device indicating that the second device should stop distributing data to the apparatus based on a determination that the apparatus is outside the coverage area of the second device.
19. An apparatus for communicating comprising:
   a processing system configured to generate a beacon message for transmission on a second link based on a relationship of a first device to a second device on a first link or a relationship of the first device to the apparatus on the second link.
20. The apparatus of Embodiment 19, wherein the processing system is configured to generate the beacon message if the relationship of the first device to the apparatus comprises the apparatus receiving at least one of a probe request or an association request from the first device on the second link.
21. The apparatus of Embodiment 19, wherein the processing system is configured to generate the beacon message if the relationship of the first device to the second device comprises the first device being associated with the second device on the first link.
22. The apparatus of Embodiment 19, wherein the processing system is configured to generate the beacon message if the relationship of the first device to the apparatus comprises the first device being associated with the apparatus on the second link.
23. The apparatus of Embodiment 19, wherein the relationship of the first device to the second device comprises an association of the first device with the second device on the first link, and wherein the processing system is further configured to receive a communication from the first device, identify, based on the communication from the first device, a signal strength criterion of the first device based on the association between the first device and the second device and a received signal strength at the first device from the second device, and scan for the first device if the received signal strength at the first device from the second device satisfies the criterion.
24. The apparatus of Embodiment 23, wherein the identified signal strength criterion of the first device comprises a threshold, and wherein the processing system is further configured to scan for the first device if the received signal strength of the communication is equal to or above the threshold.
25. The apparatus of Embodiment 23, wherein the processing system is further configured to identify, based on the communication from the first device, at least one of a first signal strength from the first device to the second device or the first device's feedback of a second signal strength from the second device to the first device and determine the received signal strength based on at least one of the first signal strength or the second signal strength.
26. The apparatus of Embodiment 23, wherein the processing system is further configured to process a communication from the second device, the communication from the second device comprising a gathered signal strength by the second device, and to determine if the gathered signal strength satisfies the criterion, wherein the second device is within range of the apparatus when the gathered signal strength satisfies the criterion.
27. An apparatus for communicating, comprising:
   a processing system configured to generate a first beacon message that includes information for a first band and a second band, the processing system further configured to generate a second beacon message, the first beacon message being configured for transmission on the first band and the second beacon message being configured for transmission on the second band, wherein the processing system is further configured to generate the second beacon message to include information comprising a preamble with a basic service set identifier in a signal field or a physical layer sequence mapped to the basic service set identifier.
28. The apparatus of embodiment 27, wherein the processing system is further configured to generate the first beacon message for transmission on the first band at a first period and to generate the second beacon message for transmission on the second band at a second period, the second period being longer than or equal to the first period.
29. The apparatus of embodiment 27, wherein the processing system is further configured to generate the first beacon message to include paging information for a message to be transmitted on the second band and to generate a packet including the message for transmission on the second band.

## Claims

1. An apparatus for communicating comprising:
a processing system configured to generate a beacon message for transmission on a second link based on a relationship of a first device to a second device on a first link or a relationship of the first device to the apparatus on the second link.

2. The apparatus of Claim 1, wherein the processing system is configured to generate the beacon message if the relationship of the first device to the apparatus comprises the apparatus receiving at least one of a probe request or an association request from the first device on the second link.

3. The apparatus of Claim 1, wherein the processing system is configured to generate the beacon message if the relationship of the first device to the second device comprises the first device being associated with the second device on the first link.

4. The apparatus of Claim 1, wherein the processing system is configured to generate the beacon message if the relationship of the first device to the apparatus comprises the first device being associated with the apparatus on the second link.

5. The apparatus of Claim 1, wherein the relationship of the first device to the second device comprises an association of the first device with the second device on the first link, and wherein the processing system is further configured to receive a communication from the first device, identify, based on the communication from the first device, a signal strength criterion of the first device based on the association between the first device and the second device and a received signal strength at the first device from the second device, and scan for the first device if the received signal strength at the first device from the second device satisfies the criterion.

6. The apparatus of Claim 5, wherein the identified signal strength criterion of the first device comprises a threshold, and wherein the processing system is further configured to scan for the first device if the received signal strength of the communication is equal to or above the threshold.

7. The apparatus of Claim 5, wherein the processing system is further configured to identify, based on the communication from the first device, at least one of a first signal strength from the first device to the second device or the first device's feedback of a second signal strength from the second device to the first device and determine the received signal strength based on at least one of the first signal strength or the second signal strength.

8. The apparatus of Claim 5, wherein the processing system is further configured to process a communication from the second device, the communication from the second device comprising a gathered signal strength by the second device, and to determine if the gathered signal strength satisfies the criterion, wherein the second device is within range of the apparatus when the gathered signal strength satisfies the criterion.

9. An apparatus for communicating, comprising:
a processing system configured to generate a first beacon message that includes information for a first band and a second band, the processing system further configured to generate a second beacon message, the first beacon message being configured for transmission on the first band and the second beacon message being configured for transmission on the second band, wherein the processing system is further configured to generate the second beacon message to include information comprising a preamble with a basic service set identifier in a signal field or a physical layer sequence mapped to the basic service set identifier.

10. The apparatus of claim 9, wherein the processing system is further configured to generate the first beacon message for transmission on the first band at a first period and to generate the second beacon message for transmission on the second band at a second period, the second period being longer than or equal to the first period.

11. The apparatus of claim 9, wherein the processing system is further configured to generate the first beacon message to include paging information for a message to be transmitted on the second band and to generate a packet including the message for transmission on the second band.

12. The apparatus of any of claims 1 to 8 further comprising an antenna configured to communicate on the wireless network, wherein the apparatus is configured as an access point.

13. The apparatus of any of claims 9 to 11 further comprising an antenna configured to communicate on the wireless network, wherein the apparatus is configured as an access point.

14. A method, comprising:
generating a beacon message for transmission on a second link based on a relationship of a first device to a second device on a first link or a relationship of the first device to the apparatus on the second link.

15. A computer program comprising instructions for implementing the method of claim 14.
